# EUROPEAN PATENT APPLICATION

(11) **EP 2 015 101 A2**
(43) Date of publication of application: **14.01.2009**
(21) Application number: 08380214.0
(22) Date of filing: 14.07.2008
(51) Int. Cl.: G01S 5/00, G01S 5/02

(54) **System and process for enabling location queries for locating a user of a mobile terminal for mobile networks which adds dimensions of time, are, probability and distance beween users**

(30) Priority: 12.07.2007 ES 200701957
(71) Applicant: Vodafone Group PLC, Newbury Berkshire RG14 2FN (GB)
(72) Inventor: Almodovar Herraiz, Daniel, 28108 Alcobendas (Madrid) (ES); Touset Rios, Miguel Angel, 28108 Alcobendas (Madrid) (ES); Rubio Andres, Francisco Javier, 28108 Alcobendas (Madrid) (ES)
(74) Representative: Carpintero Lopez, Francisco

(57) **Abstract**

The invention relates to a system and a process for enabling location queries for mobile networks which allows considering the dimensions of time, area, probability and relative distance between users, for enabling queries by services and applications which use or benefit from these dimensions. The proposed system and process is superimposed on any location system existing in mobile networks (1) and allows aiding it with specific functions present in the mobile terminal which, for example, inform on other nearby mobile terminals detected by means of short-range radio technologies, inform on the change of cell by the mobile terminal when such terminal is in inactive mode or informs on the absolute location available by means independent of the mobile network (2, 2'). The invention includes: functions of collecting, calculating, filtering and storing raw information on absolute and relative location between users (3, 4); functions of aggregating, calculating, filtering and storing post-processing material from the foregoing (5, 6); and an interface or gateway (8), together with the necessary auxiliary calculation functions (7), for enabling queries by services and applications (9, 9', 9"), from the information contained in both storage functions.

## Description

### Field of the Invention

The invention relates to a process and to a system for enabling location queries for locating a user of a mobile terminal for mobile networks providing the dimensions of time, area, probability and relative distance between users, for the purpose of enabling queries by services and applications which use or benefit from these dimensions.

### Background of the Invention

Location systems for mobile networks are still very limited today regarding information relating to location which can be obtained on a user, which limits the queries on location that they enable. In fact, a traditional location system of mobile networks simply provides a vector (X, Y) wherein X and Y are the absolute coordinates for the instant in which the query is made. In particular, current location systems are not able to provide additional dimensions such as time or ranges of time T, area A, probability P or relative distance d between users. A system providing these dimensions would enable, by way of example, the following queries:
- what is the probability of finding a user U within a certain area A in a range of times T of the day?
- what are the most probable places where a user U in can be found in a range of times T of the day?
- in what range of times T of the day are users U₁ and U₂ located closest to one another?
- what is the probability that throughout the day they are within less than 100 meters?
- can user U₁ be reached from user U₂ through other users in less than 5 hops such that each hop is less than 20 meters?

Current market trends related to social networks, communities and technologies for emerging markets lead to services and applications demanding this type of information on location of the users, i.e., the dimensions of the time, area, probability and relative distance between users. In fact, the latter can provide the necessary bridge between face-to-face actual encounters and virtual encounters based on telecommunications, something which is currently still very immature and which can be converted into a powerful enabler for constructing or enriching community-based services.

The invention responds to this need in a novel manner, proposing a system and a process not currently existing or proposed in any known research study, article or patent. It can indirectly and partially be related to the following areas:
- ad-hoc or proximity communications (for example, by means of Bluetooth technology in mobile terminals) and services which can be offered based on such communications; for example, discovery of other users, file exchange, advertising, etc.
- contact networks, with their associated concept of reaching someone through several hops (friend of a friend of a friend), and commercial examples such as Linked-In or Xing, professional contact networks through a webpage.
- data mining mechanisms with the detection of patterns in large data collections (for example, use statistics in mobile networks such as those which appear in a detailed invoice: number of calls, duration, time at which they were made, etc.)
- the capacities currently existing in mobile networks relating to location and data storage, both in the terminal and in the network.

As mentioned, the invention can make use of knowledge in these areas, but it is novel with regard to any of them separately or with regard to known combinations.

From different points of view, the invention can also be seen as an evolutionary progress with regard to current systems:
- On one hand, if a traditional location system provides a vector (X, Y, t) where X and Y are the absolute coordinates and t the exact moment in which the location measurement was taken, then the system and process proposed in the invention is able to provide an improved location vector, for example, of the type (A, T, P) in which A is a certain geographical area and P represents the probability that the user is there in the range of time T (defined for example as a range of certain hours of the day); or for a pair of users A and B, a vector (d, T, P) indicating the probability P that both of them are at distance d in range of time T.
- On the other hand, introducing a new dimension such as the relative distance with regard to other users can be considered, in the perspective of prior location systems in mobile networks, such as the continuation of an evolutionary trend by adding a fourth level:
   1. First level: absolute location of the mobile terminal (for example, latitude and longitude or UTM coordinates).
   2. Second level: relative location of the mobile terminal with regard to a fixed point (for example, distance to a beacon located in a tower, or indication of if it is inside or outside an enclosure).
   3. Third level: relative location of the mobile terminal with regard to a moving point (for example, distance to a beacon placed on a bus).
   4. Fourth level: relative location of the mobile terminals from one another (distance with regard to each of the others).

All the background documents found related to this invention only relate to partial aspects thereof. For example, the Imity project (imity.com), comprised in the field of mobile social networks, stores in a database actual encounters that a mobile user has with others through the Bluetooth interface of the telephone. It will later be described how this is just one of the optional aspects that the invention contains.

It is known that abbreviations and acronyms are frequently used in the field of mobile telephony. A glossary of acronyms/terms used throughout the specification is provided below:
- A-GPS: Assisted GPS
- API: Application Programming Interface
- CDMA: Code Division Multiple Access
- Cell-ID: Cell Identity
- DHT: Distributed Hash Table
- E-OTD: Enhanced Observed Time Difference
- GPS: Global Positioning System
- GSM: Global System for Mobile Communications
- RTT: Round Trip Time
- SQL: Structured Query Language
- TA: Time Advance
- UMTS: Universal Mobile Telecommunications System
- UTM: Universal Transverse Mercator (coordinate system)
- WiFi: Wireless Fidelity (technology trade name)

### Description of the Invention

The invention relates to a process and to a system for enabling advanced location queries for locating a user of a mobile terminal according to claims 1 and 12, respectively. Preferred embodiments of the process are defined in the dependent claims.

Thus, a first aspect of the invention relates to a process for enabling location queries for locating users of a mobile network, comprising, for a plurality of time instants tₘ:
- collecting, from said mobile network, information on absolute location of a group of mobile terminals {Uᵢ, Uⱼ, ...};
- calculating, based on said information on absolute location, information on relative distance d^{i,j} between each pair of mobile terminals Uᵢ, Uⱼ; and/or collecting from a mobile terminal Uᵢ equipped with short-range radio technology, information on relative distance of said mobile terminal Uᵢ with regard to at least a second mobile terminal Uⱼ;
- storing said information on absolute location and relative distances;
wherein the process further comprises, based on said information on absolute location and relative distances, for each range of times T, where said range of times T includes two or more time instants tₘ:
- generating a first aggregate table of absolute locations by condensing said information on absolute location for the plurality of times tₘ in the form of parameters of a two-dimensional statistical distribution;
- generating a second aggregate table of absolute locations by calculating the percentage Pₖⁱ of time that the mobile terminal Uᵢ is located within an area Aₖⁱ, Aₖ;
- generating a first aggregate table of relative locations by condensing said information on relative distances for the plurality of times tₘ in the form of parameters of a one-dimensional statistical distribution;
- generating a second aggregate table of relative locations by calculating the percentage Pₖ^{i,j} of time that the relative distance d^{i,j} between each pair of mobile terminals is located within a segment Sₖ^{i,j}, Sₖ;
- providing an interface or gateway for enabling queries by external applications, the queries relating to said values of a range of times T, to probabilities or percentages Pₖ, Pₖ^{i,j}, to areas Aₖ, Aₖⁱ or segments Sₖ, Sₖ^{i,j}, to said parameters of said two-dimensional and one-dimensional statistical distributions and/or relating to said information on absolute location and relative distances d^{i,j}.

Said area Aₖⁱ can be calculated for each terminal Uᵢ by means of a statistical treatment of said information on absolute location. Or said area Aₖ can be pre-established or predefined independently of the absolute location of the terminals.

Said segment Sₖ^{i,j} can likewise be calculated for each pair of terminals Uᵢ, Uⱼ by means of a statistical treatment of said relative distances d^{i,j}. Or said segment Sₖ can be pre-established or predefined independently of the relative distance between terminals.

Prior to storing said information on absolute location and relative distances, said information on absolute location and relative distances can furthermore be reduced by applying pre-established filters on time, relative distances and/or number of mobile terminals.

If a first mobile terminal Uᵢ is equipped with a location technology independent of the mobile network, then said information on absolute location can be obtained from the information provided by said location technology independent of the mobile network.

If said first mobile terminal Uᵢ is further equipped with short-range radio technology, the information on absolute location can be obtained from a second mobile terminal Uⱼ by means of the information on relative distance provided by said first mobile terminal Uᵢ.

One or more of said first and second aggregate tables of absolute locations and of said first and second aggregate tables of relative locations can take data from prior aggregate tables, for the purpose of taking historical data into account.

Said range of times can be a pre-established or predefined range of times Tₙ independent of the location of the terminals.

Or said range of times can be a range of times Tₙⁱ calculated for each terminal Uᵢ by means of a statistical treatment of said information on absolute location; or it can be a range of times Tₙ^{i,j} calculated for each pair of terminals Uᵢ, Uⱼ by means of a statistical treatment of said relative distances d^{i,j}.

In other words, the invention proposes a system and a process that is superimposed on any mobile communications network (for example, GSM, CDMA, UMTS, TETRA or WiFi networks), inheriting and making use of the location technologies already existing in said network or in its terminals (for example, Cell-ID, E-OTD, A-GPS, GPS, etc.) for absolute location and also, optionally, short-range radio technologies existing in mobile terminals (for example, Bluetooth, WiFi, NFC) for relative location, i.e., of some users with regard to others. The basic feature of the invention is the optimal storage of said information on location, first in a raw manner and then in an aggregate manner, giving rise to the dimensions of a range of times T, area A, probability P and relative distance d between users, such that queries based on these dimensions are enabled. This process is described in the following paragraphs.

First, the proposed system performs the collection and massive storage of the absolute location of the user over time, as well as of the relative distance with regard to other users over time.

For the first option, the information on absolute location existing in the mobile network is made available. The invention can collect this information in two ways: on one hand, by performing successive standard queries of absolute location (X, Y) as any third party application or system would do, and on the other hand, by means of a more direct access to the internal information on location that the mobile network handles, which would only be possible when the actual operator of the mobile network implements and controls the invention. Although the second option can give rise to a more optimal and resource-efficient system than the first option, the difference between both options would essentially be the business model preferred by the operator. Likewise, it also contemplates the possibility that the mobile terminal can optionally include a location function specific for the invention (i.e., not previously existing in the mobile network). A possible example is that this specific function is responsible for collecting and informing another element of the invention of the absolute location that the mobile terminal knows by means independent of the mobile network (such as the location based on an independent GPS receiver). Another example is that this function is responsible for detecting and informing of the change of cell, which would be useful for the inactive or idle mode of mobile terminals (in which the user does not have an ongoing call or connection).

For the second, i.e., the relative distance between users, there are also two technical options, which are described below. The first method is the one that the invention uses by default and always performs. The second method is optional and is performed only if it is available.
- Default method: Obtaining the relative distances between users based on their absolute locations, collected as indicated above. The absolute value of this distance, i.e., without references to the plane (such as, for example, north, south, east and west coordinates), will be enough for the expected applications.
- Optional method: Obtaining the relative distances between users based on the data supplied by the mobile terminals when such terminals are equipped with short-range radio technologies (for example, Bluetooth or WiFi). The mobile terminal would record and inform the network of its encounters with other mobile terminals within the range of this radio technology. This information would be collected by an optional specific element of the proposed system. With the current state of the art, this second method, for those mobile users for whom it is available, provides a "fine" resolution, whereas the previously described method provides a "coarser" resolution. It is also interesting to note that this second method could be extended to mobile terminals of the network of another operator, whereas the first method cannot.

To prevent the excess storage of all this information, information filters and compression mechanisms can be applied in this first step. For example, with regard to the storage over time, a certain resolution can be established with regard to temporal frequency, such as a location sample every 10 minutes instead of every few seconds, or the new information on location can also be stored only when such location changes. Regarding the storage of relative distance, a maximum number of users U₂, U₃, U₄, etc., can be established for each user U₁ considered; for example, this number can be limited by value (the closest 100 users) or by distance (those users within 100 meters of the user). This would all allow limiting to a great extent the contacts of user U₁ with users U₂, U₃, U₄, etc., which could otherwise be in the order of tens of millions.

This storage of raw material in the first step could be performed according to any of the known database technologies, for the purpose of gaining both capacity and search efficiency. For example, the storage could be centralized or distributed, and it could also solely be in servers of the mobile network or also apart from it in the actual mobile terminals (for which protocols such as DHT, popular in peer-to-peer networks, could be used).

The following step consists of performing an intelligent post-processing on this raw material to give rise to a much smaller and more easily accessible second aggregate location database. This database will be the one that is mainly used by services and applications for enabling location queries relating to the dimensions of time, area, probability and relative distance between users, through a certain interface (for example, gateway or API). In order to satisfy the queries made through the interface, a calculation function in addition to the mere extraction of stored data will be required in most cases.

The design of the aggregate database, of the calculation function and of the query interface is closely connected to queries which require the services and applications, such that if new types of services appear in the future requiring novel queries, the design of one or several of these functional elements (database, calculation function and interface) could be modified in order to enable them. Some examples of the type of expected queries, as indicated in the background section, would be: what users have a probability of over 90% of being in area A in the moment of the day T? how many minimum-distance hops are required to go from user U₁ to user U₂ in which each hop introduces an intermediate user?

The intelligent post-processing which allows reducing the size and converting the raw material into an elaborated and aggregate material that serves as the basis for the queries can include a variety of mathematical and statistical treatments. Many of them could be taken from the data mining area of research in which there are already many mechanisms, algorithms and developed commercial solutions, although they could also be as simple as basic statistical formulas.

The invention proposes the aggregation of data of the raw table of absolute locations in the form of parameters of a two-dimensional statistical distribution (i.e., of two random discrete variables, the X and Y coordinates), parameters such as measures of centralization (for example, mean, median and mode), measures of dispersion (for example, covariance and correlation) or of regression (for example, regression line). The use of areas, either extracted from the previous distribution or pre-established areas, is also proposed for determining probability in the form of percentage of samples X, Y that are inside and outside of such areas.

In a similar manner, the invention proposes the aggregation of data of the raw table of relative locations in the form of parameters of a one-dimensional statistical distribution (i.e., of a random discrete variable, distance d), parameters such as measures of centralization (for example, mean, median and mode) and measures of dispersion (for example, variance and standard deviation). The use of segments, defined as a range of distances, either extracted from the previous distribution or pre-established segments, is also proposed for determining probability in the form of percentage of samples d that are inside and outside of such segments.

Additionally, this post-processing could also include the improvement of precision of absolute locations by making use of the relative locations available by means of short-range radio technologies. For example, user U₁ has been located by the network by means of Cell-ID technology and user U₂ by means of GPS technology, which is more accurate, and both users are located with regard to one another inside the range of their Bluetooth radio technology; then, the location of U₁ can be improved by replacing it with the location of U₂.

In addition, the system also contemplates the possibility that once the aggregate database providing service to the queries has been generated, historical data can be deleted from the raw database to save capacity given that the necessary information is already safe.

Finally, the last step is to provide the necessary interface so that the services and applications can perform queries relating to the previously obtained dimensions of time, area, probability and relative distance between users. It is a gateway element which, on one hand, is able to interact with services and applications, and on the other hand, is able to interact with raw and aggregate databases, extracting the necessary information from them (for example, by means of the SQL protocol). A calculation or processing function which operates on this extracted data to exactly respond to the query of services and applications in the terms in which it was made and which the mere retrieval of data from the databases does not resolve directly, is additionally necessary in most cases. Although it is expected that most of the queries relating to time, area, probability or relative distance between users can be resolved based on data stored in the aggregate database, the invention also contemplates access to the raw database, since such raw data can be used in some cases.

The proposed system and process allows the possibility of enabling both on-line services (which need to make queries on the location of the subscriber in real time) and off-line services (which make their queries *a posteriori,* on past data). Access to the raw database mentioned above can provide service to the former, given that the data prior to aggregation are collected and stored in real time, whereas the aggregate data can correspond to the aggregation of several different days.

The invention also relates to a mobile terminal comprising means for executing the process for enabling queries defined above.

With regard to the exploitation of this invention, as described above, it would relate to an enabler of services and applications requiring advanced location queries relating to time, area, probability or relative distance between users. These services could be provided by the actual operator of the mobile network or by third parties accessing the query interface. Some of the possible applications are listed below by way of example, many of such applications having in common the facilitation of actual encounters between users:
- Introducing the mobility and the location in current professional contact networks, such as Linked-In or Xing.
- Introducing the mobility and location in current personal contact networks, such as community networks or friendship or love search networks, etc.
- Support for Web 2.0 community-based businesses, for example, to facilitate two eBay users arranging a meeting with one another to physically exchange a purchased object or so that they can do so through intermediate users.
- Communications in rural areas or underdeveloped countries in which the transmission of messages by means of actual encounters can replace or complement the telecommunications network.
- Advertising in the mobile based on the location of the users
- Novel applications that cannot be yet be provided, from the Internet innovation "ecosystem", once they have access to the functionality provided by the invention.

### Brief Description of the Drawings

To complement the description being made and for the purpose of aiding to better understand the features of the invention, an embodiment of the invention is very briefly described below as an illustrative and non-limiting example thereof.

Figure 1 schematically shows the main elements of a possible embodiment of the invention, observing that they represent functional elements and therefore their physical implementation could be different.

Figure 2 shows the distribution of absolute locations recorded for the different time instants tₘ for a user of a mobile terminal Uᵢ.

Figure 3 shows the distribution of relative distances recorded for the different time instants tₘ for a user of a mobile terminal Uᵢ with regard to other mobile terminals Uⱼ₁-Uⱼ₄.

### Description of a Preferred Embodiment of the Invention

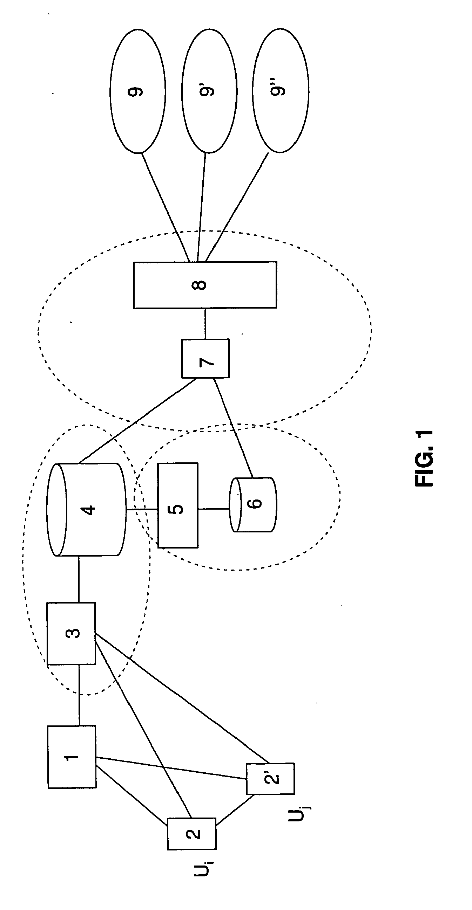

A possible embodiment of the invention (schematically shown in Figure 1) for a GSM or UMTS mobile network is described below in further detail by way of illustration, notwithstanding the fact that the invention has other possible embodiments covered by this patent.
Element 1 represents the location function already existing in the mobile network, including both elements of the network itself and the mobile terminals (for example, Cell-ID or A-GPS technologies). This is an element outside the invention but a prerequisite for its operation.
Elements 2 and 2' represent for the mobile terminals of two users Uᵢ and Uⱼ the location functions specific to the invention. For example, the specific relative location function based on the detection and recording of other nearby mobile terminals by means of short-range radio technologies such as Bluetooth and the specific absolute location function in which the mobile terminal informs the network of its absolute location obtained by means independent of the mobile network or informs of the change of cell.
Element 3 represents the function of collecting and filtering absolute locations as well as the function of collecting, filtering and calculating relative distances between users. This latter calculation is necessary for obtaining these relative distances based on the location data of the mobile network (for example, Cell-ID or A-GPS data) and furthermore, in an optional manner, based on the information sent by the mobile terminals in the event that it is available (for example, based on detection of proximity by means of Bluetooth as described above).
Element 4 represents the database or raw material storage function, i.e., the material coming directly from element 3.
Element 5 represents the post-process or aggregation function which allows converting the raw material database or storage function into an aggregate database or storage function which will provide service to most queries.
Element 6 represents the aggregate database or storage function, result of the post-process performed in element 5.
Element 7 represents the calculation function necessary for satisfying the queries beyond the mere extraction of data from the database.
Element 8 represents the query interface which the services and applications can be directed to and which in turn interacts with the databases through the calculation function 7.
Elements 9, 9' and 9" represent the services and applications which make location queries taking into account dimensions of time, area, probability and relative distance between users, and which are outside of the invention, i.e., they would make use of it.

The preferred embodiment is based on the general description of the system provided above, making decisions in those cases in which there are several alternatives and developing the details of some of the generically indicated mechanisms, especially in the information processing part, for the purpose of demonstrating the viability of the concept.

In other words, the major functions performed by the invention are: collection and optimal storage of the information on absolute and relative location (elements 3 and 4), aggregation and optimal storage of post-processing information on location (elements 5 and 6) and interface for enabling queries relating to time, areas, probability and relative distance between users (elements 7 and 8).

First, for the purpose of limiting the number of data, the preferred embodiment establishes a frequency of 10 minutes for the storage of new location data.

For the absolute location of users (element 1) the preferred embodiment makes use of the most basic mobile network location technology, which does not require the active intervention of the mobile terminal for each location event. This prevents a large signaling load in the network (for example, it would otherwise have to signal with many mobile terminals every 10 minutes, which is the frequency established herein). In particular, technologies based on Cell-ID, available in most mobile operators and representing the location of the user that the actual mobile network itself has for its normal operation, are used. It also makes use of the change of cell information provided by those mobile terminals having this functionality.

For the relative location of users (element 2, 2') it makes use of the calculation of relative distances based on the previously mentioned Cell-ID absolute locations for all the users, and also of the detection of nearby users by means of the Bluetooth port of mobile terminals for those users having this functionality. It should be noted that there are already implementations for mobile terminals on the market that are available and free of charge which perform both the function of informing on the change of cell and the function of detecting and informing of other nearby mobile terminals within the Bluetooth radio range, therefore the preferred embodiment would only have to integrate and adapt these modules.

The following paragraphs describe in further detail the function of collecting, filtering and storing raw location material (elements 3 and 4), which gives rise to a table of absolute locations and a table of relative locations:

The table of absolute locations TAL includes in each row the fields (Uᵢ, tₘ, Xₘⁱ, Yₘⁱ), where Uᵢ is the user, tₘ is the absolute time instant, and Xₘⁱ, Yₘⁱ correspond to its absolute location for this time instant tₘ in the form, for example, of latitude and longitude. A row is generated for each user every 10 minutes, for example, at the times 8:00, 8:10, 8:20, etc., although for the purpose of compressing and saving space, nothing is saved if there is no change in the location or the change is minimal (under a certain threshold established in the system), then assuming that it is identical to that of the previous row when subsequently retrieving it.
- For each active user, i.e., with an ongoing connection, this absolute location X, Y is based on the knowledge of the cell identity of the mobile network (Cell-ID) which provides service to the user, improved with the values of TA in GSM and RTT in UMTS if they are available.
- For each inactive user, i.e., with no ongoing connection, the mobile network does not know the exact cell of his or her whereabouts except for those mobile terminals incorporating the function of informing of the change of cell. For the remaining mobile terminals, only a set of broader cells, known as Location Area or Routing Area, is known. In this case, the location X, Y will be estimated with this value, unless there has been no change of area in the last 10 minutes (event called Location Area Update or Routing Area Update) because if there has been no change, it will take as an estimate the last cell in which the user was active - this is equivalent to the assumption that the user has not moved since his or her call or data connection ended.

The table of relative locations TRL includes for each row the fields (Uᵢ, tₘ; Uⱼ₁, d^{i, j1}; Uⱼ₂, d^{i, j2}; Uⱼ₃, d^{i, j3}; ...), where Uᵢ represents the user, tₘ the absolute time instant, Uⱼ₁, Uⱼ₂, Uⱼ₃, etc., represent other users and d^{i, j1}, d^{i, j2}, d^{i, j3}, etc., represent, in increasing order, the relative distance of each one of these users to Uᵢ.

Those mobile terminals having an active Bluetooth port and an operating information collection application, will detect the other mobile terminals in their environment, will store their identity in the form of MSISDN (the telephone number) and their estimated distance based on the power level, and will inform the mobile network every 10 minutes with this data. This will allow obtaining a table of relative locations as indicated above for a sub-set of the mobile terminals of the network.

On the other hand, every 10 minutes, for essentially all the mobiles of the network, relative distances with regard to the remaining mobiles of the network are calculated based on the values of absolute location extracted from the previously mentioned table of absolute locations. In order for this operation to be manageable and to prevent hundreds of millions of combinations, simplification mechanisms are included. First, distances should be calculated only for those users who have changed their location in the last 10 minutes, otherwise the previous one continues to be valid; this can be achieved by performing the total calculation only in the initialization of the system and after performing a follow-up with indicators or flags of those users who change. Users can also be grouped depending on their being in the same cell or area (Location Area or Routing Area); in the event that many users U₂, U₃, U₄, etc. share the same distance to user reference U₁, the information can be compressed by not indicating the distance in each case, only indicating it if it changes. Finally, the number of "neighbors" or users close to each user U₁ must be limited to a manageable number; it is herein proposed to reduce it to the lowest of the following amounts: the closest 500 users or the users within an N meter range; this range can be consulted in a table which, according to the absolute location of the user U₁, determines a specific value, for example, 100 meters for an urban environment, 1000 meters for a semi-urban environment and 10 kilometers for a rural environment. In any case, at the end of these calculations and processing, a table having the aforementioned format (Uᵢ, tₘ; Uⱼ₁, d^{j, j1}; Uⱼ₂, d^{i, j2}; Uⱼ₃; d^{i, j3}, ...) is available, every 10 minutes, although it is not updated if there are no changes. In the maximum case, this involves 24x6=144 entries per user per day.

Then the two different tables of relative location are combined. If for one and the same pair of neighboring users U₁, U₂ and one and the same time instant tₘ the information on relative distances calculated from the absolute location and from the data sent by the mobile terminal based on Bluetooth detection is made available at the same time, they can be combined such that for that pair of neighbors U₁, U₂ the resulting table retains just the information coming from Bluetooth detection, which is normally much more accurate.

These two tables of raw material (i.e., the table of absolute locations and the table of relative locations) are saved for the current day and the seven prior days, deleting previous days. In other words, the raw material for an entire week from Monday to Sunday will always be available. For example, on a Tuesday the data for that same day and the data of the previous Monday, Sunday, Saturday, Friday, Thursday, Wednesday and Tuesday will be available.

Part of the queries, specifically all those which can be obtained directly or by means of a simple calculation of the previously described tables of absolute (Uᵢ, tₘ, Xₘⁱ, Yₘⁱ), and/or relative (Uᵢ, tₘ; Uⱼ₁, d^{i, j1}; Uⱼ₂, d^{i,j2}; Uⱼ₃; d^{i,j3}, ...) location, can be made regarding this raw material. For example, for the table of relative locations, an example of direct query would be "at what distance is Uⱼ from Uᵢ?". And an example of a query with a simple calculation would be, "how many users are close to Uᵢ within a given distance *d*?" This is a query that can be obtained by means of a simple calculation because it is only necessary to count how many relative distances d^{i, j1}, d^{i, j2}, d^{j, j3}, etc... i.e., of users Uⱼ₁, Uⱼ₂, Uⱼ₃, etc.... towards Uᵢ are less than that given distance d.

Similarly, the following paragraphs describe in further detail the functions of aggregating or clustering and storing post-processing location material (elements 5 and 6), in other words, those functions which aggregate or condense the preceding raw material and allow approximating it to the queries provided by services and applications on the dimensions of time, area, probability and relative distance between users:

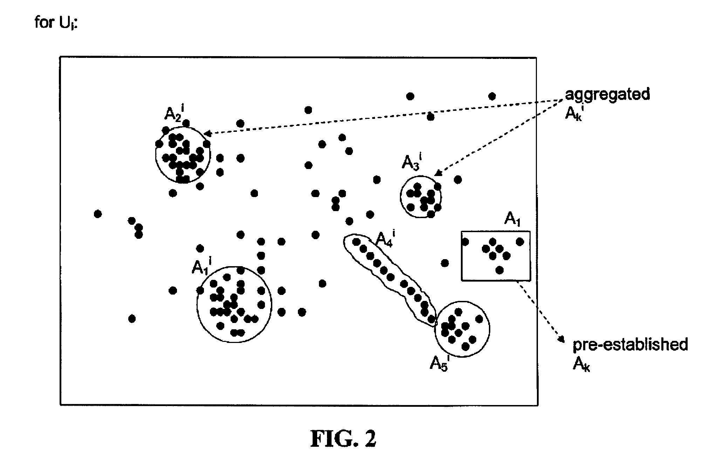

With regard to the **absolute location,** Figure 2 shows a possible distribution (for example in the X, Y plane) of the absolute locations recorded for a user Uᵢ for a certain total range of time; each of the dots (or samples) corresponds to the absolute location of the user Uᵢ in each time instant tₘ. These dots Xₘⁱ, Yₘⁱ (i.e., the X and Y coordinates for the user Uᵢ in the time instant tₘ) can be seen as the samples of a two-dimensional statistical distribution, i.e., consisting of two discrete random variables; the diagram in Figure 2 is usually referred to as a scatter plot or scatter diagram. There are several statistical techniques for characterizing these types of distributions by condensing all the samples in a small set of parameters, such as measures of centralization (for example, mean, median and mode), measures of dispersion (for example, covariance and correlation) or of regression (for example regression line). It must also be taken into account that this characterization is done for the samples of a certain period or range of time T. Given human habits, it makes sense that these ranges of time are of the order of a sub-set of the day, an entire day or the sub-set of the week (work period from Monday to Friday and weekend period from Saturday to Sunday).

Taking the foregoing into account, the preferred embodiment stores a first type of aggregate tables of absolute locations TALa.1 of the form (Uᵢ, Tₙ, pb₁ⁱ, pb₂ⁱ, pb₃ⁱ...), where pb₁ⁱ, pb₂ⁱ, pb₃ⁱ... are values of two-dimensional parameters which characterize the statistical distribution defined by the samples of absolute location of the user Uᵢ during the range of time Tₙ. At least the marginal mean and marginal variance of the variable X and the variable Y are stored.

With regard to the ranges of time Tₙ aggregate tables TALa.1 are always created for predefined ranges of time, which are: work period (Monday to Friday), weekend period (Saturday and Sunday), entire days (Monday, Tuesday, Wednesday, Thursday, Friday, Saturday and Sunday) and, for each day of the week, sub-sets of the established day, depending on the country (for example: morning from 7:00 to 13:00; lunch from 13:00 to 16:00; afternoon from 16:00 to 19:00; evening from 19:00 to 24:00; night, 24:00 to 7:00).

A type of aggregate table of sub-sets of the day that are not predefined, but rather depend on the particular location variations of the user Uᵢ, which were in fact already taken into account in the raw tables (for example, by not storing a location sample when it has not significantly changed with regard to the preceding location), is further constructed for each day of the week. These tables would have the form (Uᵢ, Tₙⁱ, pb₁ⁱ, pb₂ⁱ, pb₃ⁱ...) where Tₙⁱ indicates that the ranges of time are not common to all the users like before, but rather they are unique for each user Uᵢ.

In addition, for the purpose of taking into account a window of historical values that are older than those provided by the raw tables (last week), to calculate the values of each aggregate table TALa.1 the values of the corresponding prior aggregate table (for example, Monday with Monday, Tuesday with Tuesday, etc.) are combined with a 75% weight and the new values, aggregated from the raw tables, with 25% weight. In other words, it is an iterative process in which the first aggregate table of all of them is exclusively made up of the first raw storage week and after that start-up moment of the system, the aggregate table N+1 can be constructed by combining aggregate table N with the new raw storage data.

Sample characterization according to a two-dimensional frequency diagram (which is referred to as a stereogram in statistical nomenclature when it is represented in three dimensions) is likewise included. The X, Y plane is divided into in boxes having a certain pre-established resolution (which can be different for an urban, semi-urban or rural environment) and the number of samples of absolute location falling within each box are counted, this value representing the frequency. Then the distribution can be characterized by identifying which boxes or groups of boxes (i.e., areas) have the highest frequencies.

In particular, a series of areas Aₖⁱ in which the user Uᵢ has been physically located with the highest probability or frequency is calculated based on this frequency diagram analysis of the results contained in the tables of location TAL prior to aggregation. As indicated these areas Aₖⁱ cluster nearby samples Xₘⁱ, Yₘⁱ; for example, according to the aforementioned criterion, a reference of 100 meters in an urban environment, 1000 meters in a suburban environment and 10 km in a rural environment can be considered. Figure 2 shows these areas A₁ⁱ, A₂ⁱ, A₃ⁱ,...resulting from aggregating -or clustering- the dots (samples) in which a user of a mobile terminal Uᵢ has been located (absolute location) with the highest frequency in different time instants tₘ.

Then a second type of aggregate tables of absolute locations TALa.2 are constructed and stored on these areas Aₖⁱ (different for each user Uᵢ, since they are calculated based on the information on absolute location collected for each user), such tables having the form (Uᵢ, Tₙ; A₁ⁱ, P₁ⁱ=90%; A₂ⁱ, P₂ⁱ=35%; A₃ⁱ, P₃¹=19%;...) or (Uᵢ, Tₙⁱ; A₁ⁱ, P₁ⁱ=90%; A₂ⁱ, P₂ⁱ=35%; A₃ⁱ, P₃ⁱ=19%;...), where Uᵢ is the user, Tₙ or Tₙⁱ represents the range of time in the same way as in tables TALa.1, the areas Aₖⁱ are those previously calculated (and would be encoded, for example, in the geometric form as disjoint circles or parallelograms), and Pₖⁱ is the percentage of time, for each range of time Tₙ, that the user Uᵢ has been in each a of these areas Aₖⁱ, and which therefore corresponds to the probability that the user is located there for that range of time Tₙ (low probabilities, for example, those less than 5%, could be eliminated to optimize storage). These types of tables TALa.2 are also calculated for a series of pre-established areas Aₖ. Figure 2 shows by way of example the rectangular area A_{1,} independent of the user Uᵢ, which would be the same for all the users, therefore the tables would have the format (Uᵢ, Tₙ; A₁, P₁ⁱ=90%; A₂, P₂ⁱ=35%; A₃, P₃¹=19%;...) or (Uᵢ, Tₙⁱ; A₁, P₁ⁱ=90%; A₂, P₂ⁱ=35%; A₃, P₃ⁱ=19%;...). These areas Aₖ can correspond to certain high-traffic dots or dots of interest for the operator of the mobile network, for example, the different pavilions within the IFEMA fair grounds of Madrid (A₁=pavilion 1, A₂=pavilion 2, etc.), in which the division of existing cells allows the mobile network to distinguish in which pavilion a user is found at all times based on the Cell-ID information. The aggregate tables TALa.2 also perform the same treatment to consider the historical data (in other words, to consider the prior aggregate data with a 75% weight) as the tables TALa.1.

With regard to the **relative location,** the aggregation process is similar to that of absolute location, giving rise to a first type of aggregate tables of relative location TRLa.1 and to a second type TRLa.2. The most significant differences are that the distribution of distances is one-dimensional and that the areas are swept circles that can be defined by a segment or range of distances. In any case, the entire process is explained in the following paragraphs.

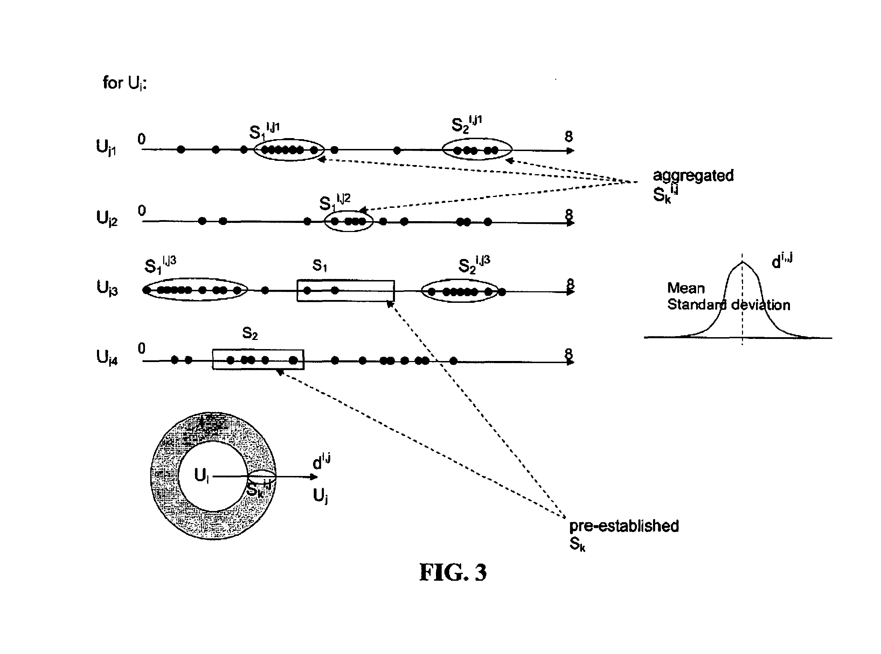

Figure 3 shows a possible distribution, in an axis of distances from 0 to infinity, of the relative distances recorded for a user Uᵢ with regard to other users Uⱼ₁, Uⱼ₂, Uⱼ₃ and Uⱼ₄ for a certain total range of time; each of the dots (or samples) corresponds to the relative distance between the users Uᵢ and Uⱼ in each time instant tₘ. For each pair of users, these dots dₘ^{i,j} can be seen as the samples of a one-dimensional statistical distribution, i.e., consisting of a single random discrete variable. There are several statistical techniques for characterizing these types of distributions by condensing all the samples in a small set of parameters, such as measures of centralization (for example, mean, median and mode), and measures of dispersion (for example, variance and standard deviation). It must also be taken into account that this characterization is done for the samples of a certain period or range of time. Given human habits, it makes sense that these ranges of time are of the order of a sub-set of the day, an entire day or the sub-set of the week (work period of Monday to Friday and weekend period, of Saturday a Sunday).

Taking the foregoing into account, the preferred embodiment stores a first type of aggregate tables of relative locations TRLa.1 of the form (Uᵢ, Tₙ; Uⱼ₁, pb₁^{i,j1}, pb₂^{i,j1}, pb₃^{i,j1}...; Uⱼ₂, pb₁^{i,j2}, pb₂^{i,j2}, pb₃^{i, j2}...; Uⱼ₃, pb₁^{i,j3}, Pb₂^{i,j3}, pb₃^{i,j3}...) where pb₁^{i,j}, pb₂^{i,j}, pb₃^{i,j}... are values of one-dimensional parameters characterizing the statistical distribution defined by the samples of relative distances between the users Uᵢ and Uⱼ during the range of time Tₙ. At least the mean and variance are stored. With regard to the ranges of time Tₙ, aggregate tables TRLa.1 are always created for predefined ranges of time, which are: work period (Monday to Friday), weekend period (Saturday and Sunday), entire days (Monday, Tuesday, Wednesday, Thursday, Friday, Saturday and Sunday) and, for each day of the week, established sub-sets of the day, depending on the country (for example: morning from 7:00 to 13:00; lunch from 13:00 to 16:00; afternoon from 16:00 to 19:00; evening from 19:00 to 24:00; night, 24:00 to 7:00). A type of aggregate table of sub-sets of the day that are not predefined, but rather depend on the particular variations of relative location between the users U_{¡} and Uⱼ, is further constructed for each day of the week. These tables would have the form (Uᵢ, Tₙ^{i,j}; Uⱼ, pb₁^{i,j}, pb₂^{i,j}, pb₃^{i,j}...), where Tₙ^{i,j} indicates that the ranges of time are not common to all the users or to all the pairs of users like before, but rather are unique for each pair of users Uᵢ and Uⱼ.

In addition, for the purpose of taking into account a window of historical values older than those provided by the raw tables (last week), to calculate the values of each aggregate table TRLa.1 the values of the corresponding prior aggregate table (for example, Monday with Monday, Tuesday with Tuesday, etc.) are combined with 75% weight and the new aggregate values of the raw tables with a 25% weight.

Sample characterization according to a one-dimensional frequency diagram (which is referred to as a histogram in statistical nomenclature when it is represented in two dimensions) is likewise included. The axis of distances d is divided into slots having a certain pre-established resolution (which can be different for an urban, semi-urban or rural environment) for each pair of users and the number of samples of relative location falling within each slot are counted, this value representing the frequency. Then the distribution can be characterized by identifying which slots or groups of slots (i.e., segments) have the highest frequencies. As can be seen in Figure 3, a segment or range of relative distances is equivalent in the X, Y plane to the area of a swept circle. In other words, given that the absolute value of the distance is known but the orientation (for example, north, south, east or west) is not, a segment or range of distances, defined by two ends, marks an area around reference user Uᵢ in the form of swept circle with the inner and outer radii corresponding to these ends.

A series of ranges of distances or segments Sₖ^{i,j} in which user Uⱼ has been physically located with the highest probability or frequency with regard to user Uᵢ is calculated based on this frequency diagram analysis of the results contained in the tables of location TRL prior to aggregation. As indicated, these areas Sₖ^{i,j} cluster nearby samples dₘ^{i,j}; for example, according to the aforementioned criterion, different references can be considered in urban, suburban and rural environments. Figure 3 shows these areas S₁^{i,j1}, S₁^{i,j2}, S₁^{i,j3},... resulting from aggregating -or clustering- the distances (samples) that the users of a mobile terminal Uⱼ₁, Uⱼ₂, Uⱼ₃ have had with regard to user Uᵢ with the highest frequency in different time instants tₘ.

Then a second type of aggregate tables of relative locations TRLa.2 are constructed and stored on these areas Sₖ^{i,j} (different for each pair of users Uᵢ and Uⱼ,, since they are calculated based on the information on relative location collected for each pair), such tables having the form (Uᵢ, Tₙ; Uⱼ₁, S₁^{i,j1}, P₁^{i,j1}=90%; S₂^{i,j1}, P₂^{i,j1}=35%. S₃^{i,j1}, P₃^{i,j1}=19%;...; Uⱼ₂, S₁^{i,j2}, P₁^{i,j2}=70%. S₂^{i,j2}, P₂^{i,j2}=47%; S₃^{i,j2}, P₃^{i,j2}=21%;...; Uⱼ₃, S₁^{i,j3}, P₁^{i,j3}=69%; S₂^{i,j3}, P₂^{i,j3}=44%; S₃^{i,j3}, P₃^{i,j3}=9%;...) or (Uᵢ, Tₙ^{i,j}; Uⱼ, S₁^{i,j}, P₁^{i,j}=90%; S₂^{i,j}, P₂^{i,j}=35%; S₃^{i,j}, P₃^{i,j}=19%,...) where Uᵢ is the user, Tₙ or Tₙⁱ represents the range of time in the same way as in the tables TRLa.1, the segments Sₖ^{i,j} are those previously calculated (and would be encoded by means of their two end values), and Pₖ^{i,j} is the percentage of time, for each range of time Tₙ, that the distance between Uᵢ and Uⱼ has been within each of these segments Sₖ^{i,j}, and which therefore corresponds to the probability that such distance is between the end values defining the segment (low probabilities, for example, less than 5%, could be eliminated to optimize storage).

These types of tables TRLa.2 are also calculated for a series of pre-established segments Sₖ. Figure 3 shows by way of example segments S₁ and S₂, which would be the same for all the users, therefore the tables would have the format (Uᵢ, Tₙ; Uⱼ₁, S₁, P₁^{i,j1}=90%; S₂, P₂^{i,j1}-35%; S₃, P₃^{i,j1}=19%;...; Uⱼ₂, S₁, P₁^{i,j2}=70%; S₂, P₂^{i,j2}=47%; S₃, P₃^{i,j2}=21%;...; Uⱼ₃, S₁, P₁^{i,j3}=69%; S₂, P₂^{i,j3}=44%; S₃, P₃^{i,j3}=9%;...) or (Uᵢ, Tₙ^{i,j}; Uⱼ, S₁, P₁^{i,j}=90%; S₂, P₂^{i,j}=35%; S₃, P₃^{i,j}=19%,...). Since these segments Sₖ are relative between users, such segments do not correspond to any fixed geographical point of interest for the operator (such as high-traffic dots), but rather to ranges of distances between users that can be interesting to consider. The most typical case is to define a segment whose end value is less than 0, which will lead to knowing the percentages of time or probabilities in which a pair of users is closer to a given value (for example, closer than 10 meters). The aggregate tables TRLa.2 also perform the same treatment to consider the historical data (in other words, to consider the prior aggregate data with a 75% weight) as the tables TRLa.1.

Once both the raw tables corresponding to the current day and the last week, as well as the aggregate tables, are available, the query interface and the necessary calculation functions would be easily implemented with common mechanisms (for example, SQL, Java APIs, etc.).

The invention has been described according to preferred embodiments thereof, but for a person skilled in the art it will be evident that multiple variations can be introduced in said preferred embodiments without exceeding the object of the claimed invention.

## Claims

1. Process for enabling location queries for locating users of a mobile network, comprising, for a plurality of time instants tₘ:
- collecting, from said mobile network, information on absolute location of a group of mobile terminals {Uᵢ, Uⱼ, ...};
- calculating, based on said information on absolute location, information on relative distance d^{i,j} between each pair of mobile terminals Uᵢ, Uⱼ; and/or collecting from a mobile terminal Uᵢ equipped with short-range radio technology, information on relative distance of said mobile terminal Uᵢ with regard to at least a second mobile terminal Uⱼ;
- storing said information on absolute location and relative distances;
wherein the process further comprises, based on said information on absolute location and relative distances, for each range of times T, where said range of times T includes two or more time instants tₘ:
- generating a first aggregate table of absolute locations by condensing said information on absolute location for the plurality of times tₘ in the form of parameters of a two-dimensional statistical distribution;
- generating a second aggregate table of absolute locations by calculating the percentage Pₖⁱ of time that the mobile terminal Uᵢ is located within an area Aₖⁱ, Aₖ;
- generating a first aggregate table of relative locations by condensing said information on relative distances for the plurality of times tₘ in the form of parameters of a one-dimensional statistical distribution;
- generating a second aggregate table of relative locations by calculating the percentage Pₖ^{i,j} of time that the relative distance d^{i,j} between each pair of mobile terminals is located within a segment Sₖ^{i,j}, Sₖ;
- providing an interface or gateway for enabling queries by external applications relating to said values of a range of times T, to probabilities or percentages Pₖ, Pₖ^{i,j}, to areas Aₖ, Aₖⁱ or segments Sₖ, Sₖ^{i,j}, to said parameters of said two-dimensional and one-dimensional statistical distributions and/or relating to said information on absolute location and relative distances d^{i,j}.

2. Process according to claim 1, wherein said area Aₖⁱ is calculated for each terminal Uᵢ by means of a statistical treatment of said information on absolute location.

3. Process according to claim 1, wherein said area Aₖ is a pre-established or predefined area independent of the absolute location of the terminals.

4. Process according to any of the preceding claims, wherein said segment Sₖ^{i,j} is calculated for each pair of terminals Uᵢ, Uⱼ by means of a statistical treatment of said relative distances d^{i,j}.

5. Process according to any of claims 1-3, wherein said segment Sₖ is a pre-established or predefined segment independent of the relative distance between terminals.

6. Process according to any of the preceding claims which, prior to storing said information on absolute location and relative distances, further comprises reducing said information on absolute location and relative distances by applying pre-established filters on time, relative distances and/or number of mobile terminals.

7. Process according to any of the preceding claims, wherein if a first mobile terminal Uᵢ is equipped with a location technology independent of the mobile network, said information on absolute location is obtained from the information provided by said location technology independent of the mobile network.

8. Process according to claim 7, wherein if said first mobile terminal Uᵢ is further equipped with short-range radio technology, the information on absolute location of a second mobile terminal Uⱼ is obtained by means of the information on relative distance provided by said first mobile terminal Uᵢ.

9. Process according to any of the preceding claims, wherein one or more of said first and second aggregate tables of absolute locations and of said first and second aggregate tables of relative locations take data from prior aggregate tables, for the purpose of taking historical data into account.

10. Process according to any of the preceding claims, wherein said range of times is a pre-established or predefined range of times Tₙ independent of the location of the terminals.

11. Process according to any of the preceding claims, wherein said range of times is a range of times Tₙⁱ calculated for each terminal U_{¡} by means of a statistical treatment of said information on absolute location; or it is a range of times Tₙ^{i,j} calculated for each pair of terminals Uᵢ, Uⱼ by means of a statistical treatment of said relative distances d^{i,j}.

12. System for enabling location queries for locating users of a mobile network, comprising, for a plurality of time instants tₘ:
- collection means for collecting from said mobile network (1) information on absolute location of a group of mobile terminals {Uᵢ, Uⱼ, ...};
- calculation means (3) for calculating, based on said information on absolute location, information on relative distance d^{i,j} between each pair of mobile terminals Uᵢ, Uⱼ; and/or collecting (2, 2'), from a mobile terminal Uᵢ equipped with short-range radio technology, information on relative distance of said mobile terminal Uᵢ with regard to at least a second mobile terminal Uⱼ;
- a first database (4) for storing said information on absolute location and relative distances;
wherein the system further comprises, based on said information on absolute location and relative distances, for each range of times T, where said range of times T includes two or more time instants tₘ:
- means (5, 6) of generating a first aggregate table of absolute locations by condensing said information on absolute location for the plurality of times tₘ in the form of parameters of a two-dimensional statistical distribution;
- means (5, 6) of generating a second aggregate table of absolute locations by calculating the percentage Pₖⁱ of time that the mobile terminal Uᵢ is located within an area Aₖⁱ, Aₖ;
- means (5, 6) of generating a first aggregate table of relative locations by condensing said information on relative distances for the plurality of times tₘ in the form of parameters of a one-dimensional statistical distribution;
- means (5, 6) of generating a second aggregate table of relative locations by calculating the percentage Pₖ^{i,j} of time that the relative distance d^{i,j} between each pair of mobile terminals is located within a segment Sₖ^{i,j}, Sₖ; and,
- an interface or gateway (7, 8) for enabling queries by external applications (9, 9', 9") relating to said values of ranges of times T, to probabilities or percentages Pₖ, Pₖ^{i,j}, to areas Aₖ, Aₖⁱ or segments Sₖ, Sₖ^{i,j}, to said parameters of said two-dimensional and one-dimensional statistical distributions and/or relating to said information on absolute location and relative distances d^{i,j}.

13. Mobile terminal comprising means for performing the process according to any of claims 1-11.
